# EUROPÄISCHE PATENTSCHRIFT

(11) **EP 2 582 539 B1**
(45) Veröffentlichungstag und Bekanntmachung des Hinweises auf die Patenterteilung: **10.06.2015**
(21) Anmeldenummer: 11712769.6
(22) Anmeldetag: 01.04.2011
(51) Int. Cl.: B60K 6/52, B60K 6/40, B60K 7/00

(54) **HYBRIDANTRIEBSSTRANG**
HYBRID DRIVE-TRAIN
CHAÎNE CINÉMATIQUE HYBRIDE

(30) Priorität: 17.06.2010 DE 102010017420
(43) Veröffentlichungstag der Anmeldung: 24.04.2013
(73) Patentinhaber: Dr. Ing. h.c. F. Porsche AG, 70435 Stuttgart (DE)
(72) Erfinder: FUECHTNER, Martin, 70197 Stuttgart (DE)
(86) Internationale Anmeldenummer: PCT/EP2011/001659
(87) Internationale Veröffentlichungsnummer: WO 2011/157312

(56) Entgegenhaltungen:
- WO-A1-95/33630
- DE-A1- 10 314 182
- DE-A1- 19 954 544
- DE-A1-102005 037 776
- DE-A1-102006 014 514
- DE-A1-102007 031 605
- GB-A- 2 452 063

## Beschreibung

Die Erfindung betrifft einen Hybridantriebsstrang eines Kraftfahrzeugs, das mit einem mechanischen Allradantrieb ausgestattet ist, mit einer Brennkraftmaschine, die über ein Getriebe antriebsmäßig mit zwei Achsen verbindbar ist, und mit einer quer eingebauten Elektromaschinenanordnung gemäß dem Oberbegriff des Anspruchs 1. Ein solcher Hybridantriebsstrang ist aus der DE 10 2007 031 605 A bekannt.

Aufgabe der Erfindung ist es, einen Hybridantriebsstrang gemäß dem Oberbegriff des Anspruchs 1, insbesondere im Hinblick auf eine hochdynamische Fahrweise, zu verbessern.

Die Aufgabe ist bei einem Hybridantriebsstrang eines Kraftfahrzeugs, das mit einem mechanischen Allradantrieb ausgestattet ist, mit einer Brennkraftmaschine, die über ein Getriebe antriebsmäßig mit zwei Achsen verbindbar ist, und mit einer quer eingebauten Elektromaschinenanordnung, dadurch gelöst, dass die Elektromaschinenanordnung in Fahrzeugquerrichtung in etwa mittig angeordnet ist. Die Begriffe quer und Querrichtung beziehen sich auf ein Kraftfahrzeug mit dem Hybridantriebsstrang. Die Elektromaschinenanordnung kann allein oder zusammen mit der Brennkraftmaschine einer Vorderachse oder einer Hinterachse des Kraftfahrzeugs zugeordnet sein. Durch die in etwa mittige Anordnung der Elektromaschinenanordnung wird der herstellungstechnische Aufwand für eine Ausführung des Kraftfahrzeugs als Rechtslenker oder Linkslenker erheblich reduziert.

Erfindungsgemäß ist weiter an einem Rotor der Elektromaschinenanordnung ein Tellerrad eines Kegeltriebs angebracht ist. Über den Kegeltrieb kann der Rotor der Elektromaschinenanordnung mit der Brennkraftmaschine gekoppelt werden.

Ein weiteres bevorzugtes Ausführungsbeispiel des Hybridantriebsstrangs ist dadurch gekennzeichnet, dass der Elektromaschinenanordnung ein Differential zugeordnet ist, das vorzugsweise teilgesperrt oder geregelt sperrbar ist. Dadurch wird auch bei einer hochdynamischen Fahrweise sichergestellt, dass die Leistung der Elektromaschinenanordnung optimal ausgenutzt werden kann.

Ein weiteres bevorzugtes Ausführungsbeispiel des Hybridantriebsstrangs ist dadurch gekennzeichnet, dass die Elektromaschinenanordnung eine Innenläufer-Elektromaschine mit einem Rotor und einem zweigeteilten Stator umfasst, der zwei in Querrichtung voneinander beabstandete Statorhälften umfasst. Die Elektromaschinenanordnung umfasst gemäß einem Ausführungsbeispiel genau eine Innenläufer-Elektromaschine. Die beiden Statorhälften werden im Betrieb vorzugsweise gleich bestromt.

Ein weiteres bevorzugtes Ausführungsbeispiel des Hybridantriebsstrangs ist dadurch gekennzeichnet, dass zwischen den beiden Statorhälften eine Einrichtung zum Abgeben und/oder Verteilen von Drehmoment angeordnet ist, die zum Beispiel ein Tellerrad eines Kegeltriebs und/oder ein Differential umfasst. Die Einrichtung zum Abgeben oder Verteilen von Drehmoment ist vorzugsweise in Fahrzeugquerrichtung mittig angeordnet.

Ein weiteres bevorzugtes Ausführungsbeispiel des Hybridantriebsstrangs ist dadurch gekennzeichnet, dass die beiden Statorhälften Wicklungen umfassen, die miteinander verbunden sind. Das liefert den Vorteil, dass zum Betreiben der Elektromaschine nur eine Leistungselektronik benötigt wird.

Ein weiteres bevorzugtes Ausführungsbeispiel des Hybridantriebsstrangs ist dadurch gekennzeichnet, dass die Elektromaschinenanordnung eine Außenläufer-Elektromaschine mit einem Rotor umfasst, an dem ein Tellerrad eines Kegeltriebs angebracht ist. Die Elektromaschinenanordnung umfasst gemäß einem Ausführungsbeispiel genau eine Außenläufer-Elektromaschine.

Ein weiteres bevorzugtes Ausführungsbeispiel des Hybridantriebsstrangs ist dadurch gekennzeichnet, dass der Rotor über eine Kupplung antriebsmäßig mit einer Getriebeeingangswelle verbindbar ist. Bei geschlossener Kupplung kann ein Drehmoment von dem Rotor auf die Getriebeeingangswelle übertragen werden, oder umgekehrt.

Ein weiteres bevorzugtes Ausführungsbeispiel des Hybridantriebsstrangs ist dadurch gekennzeichnet, dass der Rotor über eine Kupplung antriebsmäßig mit einem Differential verbindbar ist. Über die Kupplung und das Differential kann ein Drehmoment von dem Rotor auf Antriebsräder des Kraftfahrzeugs übertragen werden.

Wenn der Rotor über eine erste Kupplung antriebsmäßig mit der Getriebeeingangswelle und über eine zweite Kupplung antriebsmäßig mit dem Differential verbindbar ist, dann wird ein Aufladen einer Batterie des Kraftfahrzeugs im Stand durch die Elektromaschine ermöglicht.

Ein weiteres bevorzugtes Ausführungsbeispiel des Hybridantriebsstrangs ist dadurch gekennzeichnet, dass die Elektromaschinenanordnung zwei in Querrichtung voneinander beabstandete Elektromaschinen umfasst, zwischen denen eine Einrichtung zum Abgeben und/oder Verteilen von Drehmoment angeordnet ist, die zum Beispiel ein Tellerrad eines Kegeltriebs und/oder ein Differential umfasst. Die beiden Elektromaschinen sind vorzugsweise beide als Innenläufer-Elektromaschinen ausgeführt. Die Einrichtung zum Abgeben und Verteilen von Drehmoment ist vorzugsweise in Fahrzeugquerrichtung mittig angeordnet.

Die Erfindung betrifft auch ein Kraftfahrzeug mit einem vorab beschriebenen Hybridantriebsstrang.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: eine stark vereinfachte Darstellung eines Kraftfahrzeugs mit einem erfindungsgemäßen Hybridantriebsstrang;
- Figur 2: einen vergrößerten Ausschnitt aus Figur 1 gemäß einem weiteren Ausführungsbeispiel;
- Figur 3: einen Ausschnitt aus Figur 1 gemäß einem weiteren Ausführungsbeispiel mit einem zweigeteilten Stator;
- Figur 4: einen Ausschnitt aus Figur 1 mit einer Elektromaschinenanordnung, die zwei Elektromaschinen umfasst;
- Figur 5: einen vergrößerten Ausschnitt aus Figur 3 gemäß weiteren Ausführungsbeispielen;
- Figur 6: eine vereinfachte Darstellung eines Portalgetriebes und
- Figur 7: eine vereinfachte Darstellung eines Planetengetriebes.

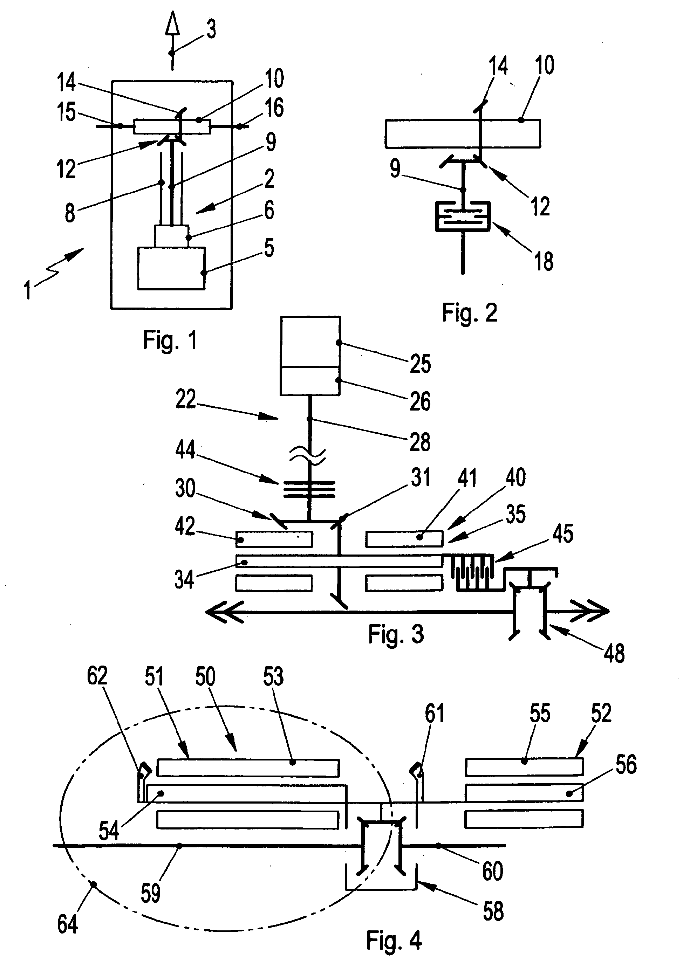

In Figur 1 ist ein Kraftfahrzeug 1 mit einem Hybridantriebsstrang 2 stark vereinfacht dargestellt. Das Kraftfahrzeug 1 wird auch als Hybridfahrzeug bezeichnet. Durch einen Pfeil 3 ist eine Vorwärtsfahrtrichtung des Kraftfahrzeugs 1 angedeutet, die mit der Fahrzeuglängsrichtung zusammenfällt.

Der Hybridantriebsstrang 2 umfasst eine Brennkraftmaschine 5 und ein Getriebe 6. Von dem Getriebe 6 geht ein Mitteltunnel 8 aus, in welchem eine Kardanwelle 9 angeordnet ist, die das Getriebe 6 antriebsmäßig mit einer Elektromaschine 10 verbindet.

Die Elektromaschine 10 ist als Außenläufer mit einem Stator ausgeführt, der innerhalb eines Rotors angeordnet ist. Die Kardanwelle 9 ist über einen Kegeltrieb 12 mit dem Rotor der Elektromaschine 10 gekoppelt. Der Kegeltrieb 12 umfasst ein Tellerrad 14, das außen direkt an dem Rotor der Elektromaschine 10 angebracht ist.

In Figur 1 ist die Elektromaschine 10 im Bereich einer Vorderachse des Kraftfahrzeugs 1 mit Achswellen 15, 16 angeordnet. An den freien Enden der Achswellen 15, 16 sind (nicht dargestellte) Antriebsräder der Vorderachse angebracht. Die Brennkraftmaschine 5 ist im Bereich einer Hinterachse des Kraftfahrzeugs 1 angeordnet. Die Kardanwelle 9 dreht sich im Betrieb mit der Ausgangsdrehzahl des Getriebes 6.

In Figur 2 ist ein Ausschnitt aus Figur 1 gemäß einem Ausführungsbeispiel dargestellt, bei welchem die Kardanwelle 9 mit einer Kupplung 18 ausgestattet ist. Über die Kupplung 18 kann die antriebsmäßige Verbindung zwischen dem Getriebe 6 und der Elektromaschine 10 bedarfsabhängig unterbrochen werden.

In Figur 3 ist ein Hybridantriebsstrang 22 mit einer Brennkraftmaschine 25 und einem Getriebe 26 stark vereinfacht dargestellt. Das Getriebe 26 ist über eine Getriebeeingangswelle 28 und einen Kegeltrieb 30, der ein Tellerrad 31 umfasst, mit einem Rotor 34 einer Elektromaschine 35 antriebsmäßig verbunden.

Die Elektromaschine 35 ist als Innenläufer mit einem Stator 40 ausgeführt, der in zwei Statorhälften 41, 42 unterteilt ist. Das Tellerrad 31 ist direkt an dem Rotor 34 der Elektromaschine 35 angebracht. Dabei ist das Tellerrad 31 mittig zwischen den beiden Statorhälften 41 und 42 angeordnet.

Eine Kupplung 44 ist zwischen das Getriebe 26 und den Kegeltrieb 30 geschaltet. Eine Kupplung 45 ist zwischen den Rotor und ein Differential 48 geschaltet, über das zwei Antriebsräder angetrieben werden. Die beiden Kupplungen 44, 45 können alternativ oder zusammen in dem Hybridantriebsstrang 22 eingebaut werden.

Wenn die Kupplung 45 in Figur 2 geöffnet wird, und gleichzeitig die Kupplung 44 geschlossen wird, dann können Batterien des Kraftfahrzeugs bei stehendem Kraftfahrzeug durch den laufenden Verbrennungsmotor über die Elektromaschine 35 aufgeladen werden. Dieser Aufladebetrieb wird auch als Standladebetrieb bezeichnet.

Zum elektrischen Fahren wird die Kupplung 44 geöffnet und die Kupplung 45 geschlossen. Zum Darstellen eines mechanischen Allradbetriebs wird die Kupplung 44 geschlossen mit einem geregelten Schlupf betrieben.

In Figur 4 ist eine Elektromaschinenanordnung 50 mit zwei Elektromaschinen 51, 52 stark vereinfacht dargestellt. Die beiden Elektromaschinen 51, 52 sind als Innenläufer ausgeführt und in Fahrzeugquerrichtung eingebaut. Jede der Elektromaschinen 51, 52 umfasst einen Stator 53; 55 und einen innen laufenden Rotor 54; 56.

Zwischen den beiden Elektromaschinen 51, 52 ist ein Differential 58 angeordnet. Über das Differential 58 sind zwei Achswellen 59, 60 antreibbar. Die beiden Achswellen 59, 60 können alternativ auch jeweils direkt durch die Rotoren 54, 56 der beiden Elektromaschinen 51, 52 angetrieben werden.

Ein Tellerrad 61 ist mit den beiden Rotoren 54, 56 der beiden Elektromaschinen 51, 52 gekoppelt. Auf der dem Differential 58 abgewandten Seite des Rotors 54 ist ein weiteres Tellerrad 62 angedeutet, das mit dem Rotor 54 gekoppelt ist.

Durch eine gestrichelte Umrandung 64 ist ein weiteres Ausführungsbeispiel mit nur einer Elektromaschine 51 angedeutet. Bei diesem Ausführungsbeispiel ist auf der einen Seite des Rotors 54 das Tellerrad 61 und auf der anderen Seite des Rotors 54 das Differential 58 angeordnet.

Bei dem Ausführungsbeispiel 64 ist die Elektromaschine 51 in Fahrzeugquerrichtung mittig angeordnet. Bei dem in Figur 4 dargestellten Ausführungsbeispiel mit den beiden Elektromaschinen 51, 52 ist das Differential 58 oder das Tellerrad 61 in Fahrzeugquerrichtung mittig angeordnet.

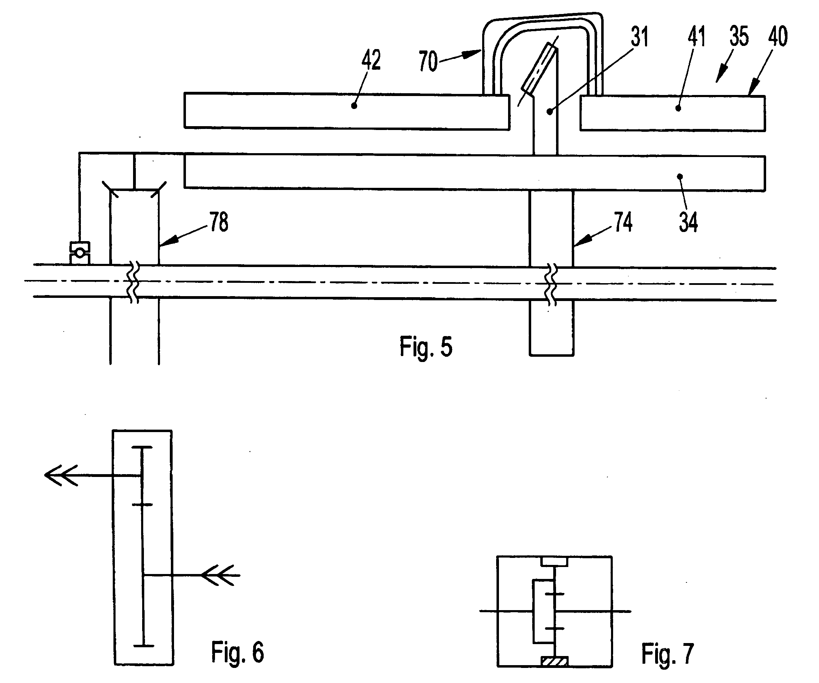

In Figur 5 ist ein Ausschnitt aus Figur 3 vergrößert gemäß weiteren Ausführungsbeispielen dargestellt. Bei 70 ist eine Verbindung angedeutet, durch welche Wicklungen der beiden Statorhälften 41, 42 miteinander verbunden sind. Die beiden Statorhälften 41, 42 sind gleich bestromt. Die Verbindung 70 erstreckt sich U-förmig um das Tellerrad 31 herum. Die Kopplung des Tellerrads 31 mit dem Kegeltrieb erfolgt an einer der Verbindung 70 abgewandten Seite.

Auf der der Verbindung 70 abgewandten Seite des Rotors 34, also in Figur 5 unten, ist ein Planetendifferential 74 angedeutet, über das Achswellen mit dem Rotor 34 koppelbar sind. An dem in Figur 5 linken Ende des Rotors 34 ist ein normales Differential 78 angedeutet, über das die Achswellen mit dem Rotor 34 koppelbar sind. Der Begriff koppelbar bedeutet in Verbindung mit dem Differential antriebsmäßig verbindbar.

Die in den Figuren 1 bis 5 dargestellten Ausführungsbeispiele betreffen alle ein Hybridfahrzeug mit mindestens einer quer zur Fahrtrichtung eingebauten Elektromaschine. Eine der Achsen ist durch die Brennkraftmaschine angetrieben. Die andere Achse kann über den Kegeltrieb durch die Elektromaschine angetrieben werden.

Die Elektromaschine ist dabei entweder mit der Getriebeeingangswelle beziehungsweise der Brennkraftmaschine oder mit der Getriebeausgangswelle mechanisch verbunden. Dadurch ergibt sich ein universell einsetzbarer mechanischer Allradantrieb für ein Hybridfahrzeug mit Frontmotor-, Heckmotor- oder Mittelmotoranordnung.

Durch das in Figur 6 angedeutete Portalgetriebe kann die jeweilige Elektromaschine zur Schwerpunktverlagerung tiefer positioniert werden als bei einer direkten Anbindung.

In Figur 7 ist ein Planetengetriebe angedeutet, wie es zur Darstellung des Planetendifferentials 74 in Figur 5 verwendet werden kann.

## Patentansprüche

1. Hybridantriebsstrang eines Kraftfahrzeugs (1), das mit einem mechanischen Allradantrieb ausgestattet ist, mit einer Brennkraftmaschine (5;25), die über ein Getriebe (6;26) antriebsmäßig mit zwei Achsen verbindbar ist, und mit einer quer eingebauten Elektromaschinenanordnung (50), **dadurch gekennzeichnet, dass** die Elektromaschinenanordnung (50) in Fahrzeugquerrichtung in etwa mittig angeordnet Ist und dass an einem Rotor (34) der Elektromaschinenanordnung ein Tellerrad (31) eines Kegeltriebs (30) angebracht ist.

2. Hybridantriebsstrang nach Anspruch 1, **dadurch gekennzeichnet, dass** der Elektromaschinenanordnung ein Differential (48;58) zugeordnet ist, das vorzugsweise teilgesperrt oder geregelt sperrbar ist.

3. Hybridantriebsstrang nach einem der vorhergehenden Ansprüche, **dadurch gekennzeichnet, dass** die Elektromaschinenanordnung eine Innenläufer-Elektromaschine (35) mit einem Rotor (34) und einem zweigeteilten Stator (40) umfasst, der zwei in Querrichtung voneinander beabstandete Statorhälften (41,42) umfasst.

4. Hybridantriebsstrang nach Anspruch 3, **dadurch gekennzeichnet, dass** zwischen den beiden Statorhälften (41,42) eine Einrichtung zum Abgeben und/oder Verteilen von Drehmoment angeordnet ist, die zum Beispiel ein Tellerrad (31) eines Kegeltriebs (30) und/oder ein Differential (48) umfasst.

5. Hybridantriebsstrang nach Anspruch 3 oder 4, **dadurch gekennzeichnet, dass** die beiden Statorhälften (41,42) Wicklungen umfassen, die miteinander verbunden sind.

6. Hybridantriebsstrang nach einem der vorhergehenden Ansprüche, **dadurch gekennzeichnet, dass** die Elektromaschinenanordnung eine Außenläufer-Elektromaschine (10) mit einem Rotor umfasst, an dem ein Tellerrad (14) eines Kegeltriebs (12) angebracht ist.

7. Hybridantriebsstrang nach einem der Ansprüche 4 bis 6, **dadurch gekennzeichnet, dass** der Rotor (34) über eine Kupplung (18;44) antriebsmäßig mit einer Getriebeeingangswelle verbindbar ist,

8. Hybridantriebsstrang nach einem der Ansprüche 4 bis 7, **dadurch gekennzeichnet, dass** der Rotor (34) über eine Kupplung (45) antriebsmäßig mit einem Differential (48) verbindbar ist,

9. Hybridantriebsstrang nach einem der vorhergehenden Ansprüche, **dadurch gekennzeichnet, dass** die Elektromaschine (50) zwei in Querrichtung voneinander beabstandete Elektromaschinen (51,52) umfasst, zwischen denen eine Einrichtung zum Ab-geben und/oder Verteilen von Drehmoment angeordnet ist, die zum Beispiel ein Tellerrad (61) eines Kegeltriebs und/oder ein Differential (68) umfasst.

10. Kraftfahrzeug mit einem Hybridantriebsstrang nach einem der vorhergehenden Ansprüche.

## Claims

1. Hybrid drive train of a motor vehicle (1) which is equipped with a mechanical all-wheel drive, having an internal combustion engine (5; 25) which can have a drive connection to two axles via a transmission (6; 26), and having a transversely installed electric machine arrangement (50), wherein the electric machine arrangement (50) is arranged approximately centrally in the transverse direction of the vehicle, **characterized in that** a crown wheel (31) of a bevel gear drive (30) is attached to a rotor (34) of the electric machine arrangement.

2. Hybrid drive train according to claim 1, **characterized in that** a differential (48; 58), which is preferably partially locked or can be locked in a controlled fashion, is assigned to the electric machine arrangement.

3. Hybrid drive train according to one of the preceding claims, **characterized in that** the electric machine arrangement comprises an internal rotor electric machine (35) with a rotor (34) and a stator (40) which is divided in two and comprises two stator halves (41, 42) which are spaced apart from one another in the transverse direction.

4. Hybrid drive train according to claim 3, **characterized in that** a device for outputting and/or distributing torque is arranged between the two stator halves (41, 42), which device comprises, for example a crown wheel (31) of a bevel gear drive (30) and/or a differential (48).

5. Hybrid drive train according to Claim 3 or 4, **characterized in that** the two stator halves (41,42) comprise windings which are connected to one another.

6. Hybrid drive train according to one of the preceding claims, **characterized in that** the electric machine arrangement comprises an external rotor electric machine (10) having a rotor to which a crown wheel (14) of a bevel gear drive (12) is attached.

7. Hybrid drive train according to one of Claims 4 to 6, **characterized in that** the rotor (34) can have a drive connection to a transmission input shaft via a clutch (18; 44).

8. Hybrid drive train according to one of Claims 4 to 7, **characterized in that** the rotor (34) can have a drive connection to a differential (48) via a clutch (45).

9. Hybrid drive train according to one of the preceding claims, **characterized in that** the electric machine (50) comprises two electric machines (51, 52) which are spaced apart from one another in the transverse direction and between which a device for outputting and/or distributing torque is arranged, which device comprises, for example, a crown wheel (61) of a bevel gear drive and/or a differential (68).

10. Motor vehicle having a hybrid drive train according to one of the preceding claims.

## Revendications

1. Chaîne cinématique hybride d'un véhicule automobile (1) muni d'un entraînement mécanique à toutes roues motrices, comprenant un moteur à combustion interne (5 ; 25) qui peut être connecté par entraînement par le biais d'une transmission (6 ; 26) à deux essieux, et comprenant un agencement de moteur électrique (50) installé transversalement, l'agencement de moteur électrique (50) étant disposé approximativement au centre dans la direction transversale du véhicule, **caractérisée en ce qu'**une couronne de différentiel (31) d'un entraînement à pignons coniques (30) est montée sur un rotor (34) de l'agencement de moteur électrique.

2. Chaîne cinématique hybride selon la revendication 1, **caractérisée en ce qu'**à l'agencement de moteur électrique est associé un différentiel (48 ; 58) qui est de préférence verrouillé en partie ou qui peut être verrouillé de manière régulée.

3. Chaîne cinématique hybride selon l'une quelconque des revendications précédentes, **caractérisée en ce que** l'agencement de moteur électrique comprend un moteur électrique (35) à rotor interne avec un rotor (34) et un stator (40) en deux parties, lequel comprend deux moitiés de stator (41, 42) espacées l'une de l'autre dans la direction transversale.

4. Chaîne cinématique hybride selon la revendication 3, **caractérisée en ce qu'**entre les deux moitiés de stator (41, 42) est disposé un dispositif pour fournir et/ou répartir un couple, lequel dispositif comprend par exemple une couronne de différentiel (31) d'une transmission à pignons coniques (30) et/ou un différentiel (48).

5. Chaîne cinématique hybride selon la revendication 3 ou 4, **caractérisée en ce que** les deux moitiés de stator (41, 42) comprennent des enroulements qui sont connectés les uns aux autres.

6. Chaîne cinématique hybride selon l'une quelconque des revendications précédentes, **caractérisée en ce que** l'agencement de moteur électrique comprend un moteur électrique à rotor extérieur (10) comprenant un rotor sur lequel est montée une couronne de différentiel (14) d'une transmission à pignons coniques (12).

7. Chaîne cinématique hybride selon l'une quelconque des revendications 4 à 6, **caractérisée en ce que** le rotor (34) peut être connecté par transmission par le biais d'un embrayage (18 ; 44) à un arbre d'entrée de transmission.

8. Chaîne cinématique hybride selon l'une quelconque des revendications 4 à 7, **caractérisée en ce que** le rotor (34) peut être connecté par transmission par le biais d'un embrayage (45) à un différentiel (48).

9. Chaîne cinématique hybride selon l'une quelconque des revendications précédentes, **caractérisée en ce que** le moteur électrique (50) comprend deux moteurs électriques (51, 52) espacés l'un de l'autre dans la direction transversale, entre lesquels est disposé un dispositif pour fournir et/ou répartir un couple, lequel dispositif comprend par exemple une couronne de différentiel (61) d'une transmission à pignons coniques et/ou un différentiel (68).

10. Véhicule automobile comprenant une chaîne cinématique hybride selon l'une quelconque des revendications précédentes.
